(19) Europäisches Patentamt
European Patent Office
Office européen des brevets

(11) **EP 3 459 628 A1**

(12) **EUROPEAN PATENT APPLICATION**
published in accordance with Art. 153(4) EPC

(43) Date of publication:
**27.03.2019 Bulletin 2019/13**

(51) Int Cl.:
**B01J 20/06** [(2006.01)]       **B01D 53/04** [(2006.01)]
**B01D 53/62** [(2006.01)]       **B01D 53/81** [(2006.01)]
**B01J 20/28** [(2006.01)]       **F24F 3/12** [(2006.01)]

(21) Application number: **17799343.3**

(22) Date of filing: **15.05.2017**

(86) International application number:
**PCT/JP2017/018233**

(87) International publication number:
**WO 2017/199919 (23.11.2017 Gazette 2017/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **16.05.2016  JP 2016098203**

(71) Applicant: **Hitachi Chemical Company, Ltd.
Chiyoda-ku
Tokyo 100-6606 (JP)**

(72) Inventors:
• **AOSHIMA Masahiro
Tokyo 100-6606 (JP)**
• **SHIMAZAKI Toshikatsu
Tokyo 100-6606 (JP)**
• **NAKAMURA Hidehiro
Tokyo 100-6606 (JP)**
• **YOSHIKAWA Kouhei
Tokyo 101-8280 (JP)**
• **KANEEDA Masato
Tokyo 101-8280 (JP)**

(74) Representative: **Hoffmann Eitle
Patent- und Rechtsanwälte PartmbB
Arabellastraße 30
81925 München (DE)**

(54) **ADSORBENT, METHOD FOR REMOVING CARBON DIOXIDE, CARBON DIOXIDE REMOVER, AND AIR CONDITIONER**

(57)    Provided is an adsorbent used for removing carbon dioxide from a gas containing carbon dioxide, the adsorbent containing cerium oxide and has a pore diameter having a differential pore volume of 0.0085 $cm^3$/g-Å or more in a region where a pore diameter is 7 Å or less in pore distribution measured by Horvath-Kawazoe method.

*Fig.1*

EP 3 459 628 A1

**Description**

**Technical Field**

The present invention relates to an adsorbent, a method for removing carbon dioxide, a device for removing carbon dioxide, and an air conditioner.

**Background Art**

In recent years, global warming caused by emission of greenhouse effect gases has become a global problem. Examples of greenhouse effect gases may include carbon dioxide ($CO_2$), methane ($CH_4$), and fluorocarbons (CFCs and the like). Among the greenhouse effect gases, the effect of carbon dioxide is the greatest, and it is demanded to construct a method for removing carbon dioxide (for example, carbon dioxide discharged from a thermal power plant, a steelworks, and the like).

In addition, it is known that carbon dioxide affects the human body. For example, drowsiness, health damage, and the like are caused when a gas containing carbon dioxide at a high concentration is sucked. In a space with a high density of people (a building, a vehicle, or the like), the concentration of carbon dioxide (hereinafter referred to as the "$CO_2$ concentration" in some cases) in the room is likely to rise due to the exhalation of people and the $CO_2$ concentration is adjusted by ventilation in some cases.

It is required to operate an air blowing device such as a blower in order to quickly replace the indoor air with outdoor air. In addition, it is required to operate the cooling system in the summer and to operate the heating system in the winter since the temperature and humidity of the air (outdoor air) taken in from the outside are not adjusted. For these reasons, an increase in $CO_2$ concentration in the room is a cause of an increase in power consumption associated with air conditioning.

The decrease amount of carbon dioxide ($CO_2$ decrease amount) in the room due to ventilation is expressed by the following equation. In the following equation, the $CO_2$ concentration can be constantly maintained when the $CO_2$ decrease amount on the left side is equivalent to the $CO_2$ increase amount due to the exhalation of people.

$$CO_2 \text{ decrease amount} = (CO_2 \text{ concentration in room} - CO_2 \text{ concentration in outdoor air}) \times \text{amount of ventilation}$$

In recent years, however, the difference between $CO_2$ concentration in the outdoor air and $CO_2$ concentration in the room has decreased since the $CO_2$ concentration in the outdoor air has increased. Hence, the amount of ventilation required for adjusting the $CO_2$ concentration has also increased. In the future, it is considered that the power consumption for the adjustment of the $CO_2$ concentration by ventilation will increase if the $CO_2$ concentration in the outdoor air further increases.

The problem is caused by replacement of the indoor air with outdoor air. Hence, the amount of ventilation can be decreased if carbon dioxide can be selectively removed by a method other than ventilation, and as a result, there is a possibility that the power consumption associated with air conditioning can be decreased.

In addition, since it is difficult to replace the indoor air with outdoor air in a space (space station, submarine, or the like) shielded from the outdoor air in which air exists, it is required to selectively remove carbon dioxide by a method other than ventilation.

Examples of a solution to the above problem may include a method in which carbon dioxide is removed by a chemical absorption method, a physical absorption method, a membrane separation method, an adsorption separation method, a cryogenic separation method, or the like. Examples thereof may include a method ($CO_2$ separation recovery method) in which carbon dioxide is separated and recovered using a $CO_2$ adsorbent (hereinafter simply referred to as the "adsorbent"). As the adsorbent, for example, zeolite is known (see, for example, Patent Literature 1 below).

**Citation List**

**Patent Literature**

Patent Literature 1: Japanese Unexamined Patent Publication No. 2000-140549

## Summary of Invention

### Technical Problem

Meanwhile, the method for removing carbon dioxide using an adsorbent is demanded to improve the amount of carbon dioxide adsorbed on the adsorbent from the viewpoint of improving the removal efficiency of carbon dioxide.

The present invention has been made in view of the above circumstances, and an object thereof is to provide an adsorbent by which the adsorption amount of carbon dioxide can be improved. In addition, an object of the present invention is to provide a method for removing carbon dioxide, a device for removing carbon dioxide and an air conditioner in which the adsorbent is used.

### Solution to Problem

An adsorbent according to the present invention is an adsorbent used for removing carbon dioxide from a gas containing carbon dioxide, the adsorbent containing cerium oxide and has a pore diameter having a differential pore volume of 0.0085 $cm^3$/g-Å or more in a region where a pore diameter is 7 Å or less in pore distribution measured by Horvath-Kawazoe method.

According to the adsorbent of the present invention, it is possible to improve the amount of carbon dioxide adsorbed on the adsorbent. Such an adsorbent exhibits excellent $CO_2$ adsorptivity (carbon dioxide adsorptivity, carbon dioxide trapping ability).

Meanwhile, in the method using an adsorbent such as zeolite, the removal efficiency of carbon dioxide tends to decrease in a case in which the $CO_2$ concentration in the gas is low. On the other hand, according to the adsorbent of the present invention, it is possible to improve the amount of carbon dioxide adsorbed on the adsorbent in a case in which the $CO_2$ concentration in the gas is low. According to the adsorbent as described above, it is possible to efficiently remove carbon dioxide in a case in which the $CO_2$ concentration in the gas is low.

It is preferable that the adsorbent according to the present invention has a pore diameter having a differential pore volume of 0.0085 $cm^3$/g-Å or more in a region where a pore diameter is 6 Å or more and 7 Å or less in the pore distribution. In this case, the adsorption amount of carbon dioxide can be further improved.

It is preferable that a content of the cerium oxide is 90% by mass or more based on a total mass of the adsorbent. In this case, the adsorption amount of carbon dioxide can be further improved.

A method for removing carbon dioxide according to the present invention includes a step of bringing the adsorbent described above into contact with a gas containing carbon dioxide to adsorb carbon dioxide on the adsorbent. According to the method for removing carbon dioxide of the present invention, it is possible to improve the amount of carbon dioxide adsorbed on the adsorbent and to improve the removal efficiency of carbon dioxide.

A device for removing carbon dioxide according to the present invention contains the adsorbent described above. According to the device for removing carbon dioxide of the present invention, it is possible to improve the amount of carbon dioxide adsorbed on the adsorbent and to improve the removal efficiency of carbon dioxide.

An air conditioner according to the present invention is an air conditioner used in a space containing a gas containing carbon dioxide, the air conditioner including a flow path connected to the space, in which a removal section for removing carbon dioxide contained in the gas is disposed in the flow path, the adsorbent described above is disposed in the removal section, and the carbon dioxide adsorbs on the adsorbent as the adsorbent comes into contact with the gas. According to the air conditioner of the present invention, it is possible to improve the amount of carbon dioxide adsorbed on the adsorbent and to improve the removal efficiency of carbon dioxide.

A $CO_2$ concentration in the gas may be 5000 ppm or less or 1000 ppm or less.

### Advantageous Effects of Invention

According to the present invention, it is possible to improve the amount of carbon dioxide adsorbed on the adsorbent. According to the present invention, it is possible to improve the amount of carbon dioxide adsorbed on the adsorbent particularly in a case in which the $CO_2$ concentration in the gas is low. According to the present invention, it is possible to provide use of an adsorbent to the removal of carbon dioxide from a gas containing carbon dioxide.

### Brief Description of Drawings

FIG.1 is a schematic diagram illustrating an air conditioner according to an embodiment of the present invention.
FIG. 2 is a schematic diagram illustrating an air conditioning system according to an embodiment of the present invention.

FIG. 3 is a diagram illustrating the pore distribution of adsorbents in Examples and Comparative Examples.

**Description of Embodiments**

In the present specification, the numerical range expressed by using "to" indicates the range including the numerical values stated before and after "to" as the minimum value and the maximum value, respectively. In a numerical range stated in a stepwise manner in the present specification, the upper limit value or lower limit value in the numerical range at a certain stage may be replaced with the upper limit value or lower limit value in the numerical range at another stage. In addition, in a numerical range stated in the present specification, the upper limit value or lower limit value in the numerical range may be replaced with the values stated in Examples.

In the present specification, the term "step" includes not only an independent step but also a step by which the intended purpose of the step can be achieved even in a case in which the step cannot be clearly distinguished from other steps. The materials exemplified in the present specification can be used singly or in combination of two or more kinds thereof unless otherwise stated. In the present specification, the content of each component in the composition means the total amount of the plurality of substances present in the composition unless otherwise stated in a case in which a plurality of substances corresponding to each component are present in the composition.

Hereinafter, embodiments for carrying out the present invention will be described in detail. However, the present invention is not limited to the following embodiments.

<Adsorbent>

The adsorbent (carbon dioxide trapping agent) according to the present embodiment contains cerium oxide and has a pore diameter having a differential pore volume of 0.0085 $cm^3$/g-Å or more in a region where a pore diameter is 7 Å or less in the pore distribution measured by the Horvath-Kawazoe method. The adsorbent according to the present embodiment is used for removing (for example, recovering) carbon dioxide from a gas (a gas to be a target of treatment) containing carbon dioxide. At least a part of carbon dioxide contained in the gas may be removed using the adsorbent.

As a result of intensive investigations, the inventors of the present invention have found out that an adsorbent containing cerium oxide exhibits excellent $CO_2$ adsorptivity in a case in which the adsorbent has a pore diameter having a differential pore volume of 0.0085 $cm^3$/g-Å or more in a region where a pore diameter is 7 Å or less in the pore distribution measured by the Horvath-Kawazoe method.

The reason why the adsorbent according to the present embodiment exhibits excellent $CO_2$ adsorptivity is not clear, but it is presumed that excellent $CO_2$ adsorptivity is obtained because the adsorption of carbon dioxide is promoted by that the frequency of contact between carbon dioxide and the pore wall in the pores is improved and that the adsorption energy of carbon dioxide derived from the curvature of the pore wall is improved as the adsorbent has a pore diameter having a predetermined differential pore volume. The adsorbent according to the present embodiment exhibits excellent $CO_2$ adsorptivity particularly in a case in which the $CO_2$ concentration in the gas is low.

Examples of cerium oxide may include CeOx (x = 1.5 to 2.0), and specific examples thereof may include $CeO_2$ and $Ce_2O_3$.

The content of cerium oxide in the adsorbent may be 30% by mass or more, 70% by mass or more, or 90% by mass or more based on the total mass of the adsorbent. The adsorbent may consist of cerium oxide (the content of cerium oxide may be substantially 100% by mass based on the total mass of the adsorbent). The adsorption amount of carbon dioxide can be further improved as the content of cerium oxide increases. The content of cerium oxide can be adjusted by, for example, the content of a cerium salt in the raw material which is for obtaining the adsorbent.

The adsorbent has a pore diameter having a differential pore volume of 0.0085 $cm^3$/g-Å or more in a region where a pore diameter is 7 Å or less in the pore distribution measured by the Horvath-Kawazoe method from the viewpoint of improving the adsorption amount of carbon dioxide. From the viewpoint of further improving the adsorption amount of carbon dioxide, the adsorbent has preferably a pore diameter having a differential pore volume of 0.01 $cm^3$/g-Å or more and more preferably a pore diameter having a differential pore volume of 0.012 $cm^3$/g-Å or more in a region where a pore diameter is 7 Å or less in the pore distribution measured by the Horvath-Kawazoe method. From the viewpoint of further improving the adsorption amount of carbon dioxide, the adsorbent has preferably a pore diameter having a differential pore volume of 0.0085 $cm^3$/g-Å or more, more preferably a pore diameter having a differential pore volume of 0.01 $cm^3$/g-Å or more, and still more preferably a pore diameter having a differential pore volume of 0.012 $cm^3$/g-Å or more in a region where a pore diameter is 6 Å or more and 7 Å or less in the pore distribution measured by the Horvath-Kawazoe method. The pore distribution of the adsorbent can be measured in conformity to the method described in Examples. In addition, the differential pore volume can be adjusted by the firing temperature, the oxygen concentration and the like when firing the raw material which is for obtaining the adsorbent.

The adsorbent may be chemically treated. For example, the specific surface area of the adsorbent may be increased by being mixed with a filler (alumina, silica, or the like) as a binder.

The BET specific surface area s1 of the adsorbent may be 100 $m^2/g$ or more, 120 $m^2/g$ or more, or 130 $m^2/g$ or more from the viewpoint of further improving the $CO_2$ adsorptivity. The BET specific surface area s1 may be 500 $m^2/g$ or less, 400 $m^2/g$ or less, or 300 $m^2/g$ or less from the viewpoint that the volume of the pores is not too great and the density of the adsorbent is not too low. The BET specific surface area s1 can be measured in conformity to the method described in Examples. The BET specific surface area s1 can be adjusted by the firing temperature, the oxygen concentration and the like when firing the raw material which is for obtaining the adsorbent.

The specific surface area s2 of the pores (micropores) having a pore diameter of less than 17 Å in the adsorbent is preferably 50 $m^2/g$ or more, more preferably 70 $m^2/g$ or more, and still more preferably 80 $m^2/g$ or more from the viewpoint of further improving the $CO_2$ adsorptivity. On the other hand, there is a possibility that the fine pores are blocked by the influence of heat and the like in a case in which the fine pores are large, and thus the specific surface area s2 is preferably 120 $m^2/g$ or less, more preferably 110 $m^2/g$ or less, and still more preferably 100 $m^2/g$ or less from the viewpoint of stabilizing the $CO_2$ adsorptivity. The specific surface area s2 can be measured in conformity to the method described in Examples. The specific surface area s2 of the micropores can be adjusted by the firing temperature, the oxygen concentration and the like when firing the raw material which is for obtaining the adsorbent.

The proportion of the micropores (the ratio of the specific surface area s2 of the micropores to the BET specific surface area s1) s2/s1 is preferably 0.3 or more, more preferably 0.4 or more, and still more preferably 0.5 or more from the viewpoint of further improving the $CO_2$ adsorptivity. The proportion of the micropores s2/s1 is preferably 1.0 or less, more preferably 0.9 or less, and still more preferably 0.8 or less from the viewpoint of further improving the $CO_2$ adsorptivity.

Examples of the shape of the adsorbent may include a powdery shape, a pellet shape, a granular shape, and a honeycomb shape. The shape of the adsorbent may be determined in consideration of the required reaction rate, pressure loss, amount adsorbed on the adsorbent, purity ($CO_2$ purity) of the gas (adsorbed gas) to adsorb on the adsorbent, and the like. The shape of the adsorbent may be the same as the shape of the raw material.

<Method for producing adsorbent>

The method for producing an adsorbent according to the present embodiment, for example, includes a firing step of firing a raw material containing at least one kind of cerium salt selected from the group consisting of a carbonate of cerium and a hydrogencarbonate of cerium. In such a method for producing an adsorbent, the cerium salt is decomposed and cerium is oxidized as a raw material containing at least one kind of cerium salt selected from the group consisting of a carbonate of cerium and a hydrogencarbonate of cerium is fired.

According to the method for producing an adsorbent, the adsorbent according to the present embodiment can be easily obtained. The reason for this is not clear, but the inventors of the present invention presume as follows. In the method for producing an adsorbent according to the present embodiment, carbon dioxide ($CO_2$) and water ($H_2O$) are discharged as a carbonate of cerium and/or a hydrogencarbonate of cerium are decomposed at the time of firing. It is presumed that an adsorbent having pores profitable for adsorption of carbon dioxide is likely to be obtained by these carbon dioxide and water.

The cerium salt may be, for example, a compound containing a cerium ion and at least one kind of ion selected from the group consisting of a carbonate ion and a hydrogencarbonate ion. A carbonate of cerium is, for example, a compound containing a cerium ion and a carbonate ion. A hydrogencarbonate of cerium is, for example, a compound containing a cerium ion and a hydrogencarbonate ion.

Examples of the carbonate of cerium may include cerium carbonate and cerium oxycarbonate. Examples of the hydrogencarbonate of cerium may include cerium hydrogencarbonate. The cerium salt may be at least one kind of salt selected from the group consisting of cerium carbonate, cerium hydrogencarbonate and cerium oxycarbonate from the viewpoint of further improving the adsorption amount of carbon dioxide. Cerium carbonate and/or cerium hydrogencarbonate may be used in combination with a cerium salt other than a carbonate and a hydrogencarbonate.

The raw material may contain a compound other than the cerium salt. Examples of another compound may include compounds containing a lanthanide (such as lanthanum, neodymium, praseodymium or the like, excluding cerium), iron, sodium and the like. The cerium salt can be fabricated by a known method. In addition, as the cerium salt, a commercially available carbonate of cerium and/or a commercially available hydrogencarbonate of cerium may be used.

The content of a cerium salt may be 90% by mass or more or 99% by mass or more based on the total mass of the raw material. The raw material containing a cerium salt may consist of a cerium salt (the content of a cerium salt may be substantially 100% by mass based on the total mass of the raw material). The adsorption amount of carbon dioxide can be further improved as the content of the cerium salt increases.

The firing temperature in the firing step is not particularly limited as long as it is a temperature at which the cerium salt can be decomposed. The firing temperature may be 150°C or more, 200°C or more, or 225°C or more from the viewpoint that the decomposition of the cerium salt is likely to proceed and thus the production time of the adsorbent can be shortened. The firing temperature may be 400°C or less, 350°C or less, 300°C or less, or 275°C or less from the viewpoint that sintering of cerium oxide hardly occurs and thus the specific surface area of the adsorbent is likely to increase. From these viewpoints the firing temperature may be 150°C to 400°C, 200°C to 350°C, 225°C to 300°C, or 225°C to 275°C.

The firing time in the firing step may be, for example, 10 minutes or more. The firing time may be, for example, 10 hours or less, 3 hours or less, or 1 hour or less.

The firing step may be performed by one stage or multi stages of two or more stages. Incidentally, it is preferable that at least one stage is the above described firing temperature and/or the above described firing time in the case of performing the firing by multi stages. The firing step can be performed in, for example, an air atmosphere or an oxygen atmosphere.

In the firing step, a dried raw material may be fired. In addition, in the firing step, the raw material may be fired as well as the solvent may be removed by heating a solution containing the raw material (for example, a solution in which a cerium salt is dissolved).

The method for producing an adsorbent according to the present embodiment may include a step of molding the raw material before being subjected to firing into a predetermined shape (for example, the shape of the adsorbent to be described later) or a step of molding the raw material after being subjected to firing into a predetermined shape.

<Method for removing carbon dioxide>

The method for removing carbon dioxide according to the present embodiment includes an adsorption step of bringing the adsorbent according to the present embodiment into contact with a gas containing carbon dioxide to adsorb carbon dioxide on the adsorbent.

The $CO_2$ concentration in the gas may be 5000 ppm or less (0.5% by volume or less) based on the total volume of the gas. According to the method for removing carbon dioxide of the present embodiment, carbon dioxide can be efficiently removed in a case in which the $CO_2$ concentration is 5000 ppm or less. The reason why such an effect is exerted is not clear, but the inventors of the present invention presume as follows. It is considered that carbon dioxide adsorbs on the adsorbent as carbon dioxide does not physically adsorb on the surface of cerium oxide but chemically bonds to the surface of cerium oxide in the adsorption step. In this case, in the method for removing carbon dioxide according to the present embodiment, it is presumed that the partial pressure dependency of carbon dioxide at the time of adsorption on the adsorbent is minor and thus carbon dioxide can be efficiently removed even when the $CO_2$ concentration in the gas is 5000 ppm or less.

From the viewpoint that the effect of efficiently removing carbon dioxide is likely to be confirmed even in a case in which the $CO_2$ concentration is low, the $CO_2$ concentration may be 2000 ppm or less, 1500 ppm or less, 1000 ppm or less, 750 ppm or less, or 500 ppm or less based on the total volume of the gas. From the viewpoint that the amount of carbon dioxide removed is likely to increase, the $CO_2$ concentration may be 100 ppm or more, 200 ppm or more, or 400 ppm or more based on the total volume of the gas. From these viewpoints, the $CO_2$ concentration may be 100 ppm to 5000 ppm, 100 ppm to 2000 ppm, 100 ppm to 1500 ppm, 100 ppm to 1000 ppm, 200 ppm to 1000 ppm, 400 ppm to 1000 ppm, 400 ppm to 750 ppm, or 400 ppm to 500 ppm based on the total volume of the gas. Incidentally, it is stipulated in the Ordinance on Health Standards in Office of the Occupational Safety and Health Act that the $CO_2$ concentration in the room should be adjusted to 5000 ppm or less. In addition, it is known that drowsiness is induced in a case in which the $CO_2$ concentration exceeds 1000 ppm and it is stipulated in the Management Standard of Environmental Sanitation for Buildings that the $CO_2$ concentration should be adjusted to 1000 ppm or less. Hence, there is a case in which the $CO_2$ concentration is adjusted by ventilation so as not to exceed 5000 ppm or 1000 ppm. The $CO_2$ concentration in the gas is not limited to the above range, and it may be 500 ppm to 5000 ppm or 750 ppm to 5000 ppm.

The gas is not particularly limited as long as it is a gas containing carbon dioxide, and it may contain a gas component other than carbon dioxide. Examples of the gas component other than carbon dioxide may include water (water vapor, $H_2O$), oxygen ($O_2$), nitrogen ($N_2$), carbon monoxide (CO), SOx, NOx, and volatile organic compounds (VOC). Specific examples of the gas may include air in the room of a building, a vehicle, and the like. In the adsorption step, in a case in which the gas contains water, carbon monoxide, SOx, NOx, volatile organic compounds, and the like, these gas components adsorb on the adsorbent in some cases.

Meanwhile, the $CO_2$ adsorptivity of an adsorbent such as zeolite tends to significantly decrease in a case in which the gas contains water. Hence, in order to improve the $CO_2$ adsorptivity of the adsorbent in the method using an adsorbent such as zeolite, it is required to perform a dehumidifying step of removing moisture from the gas before bringing the gas into contact with the adsorbent. The dehumidifying step is performed by using, for example, a dehumidifying device, and this thus leads to an increase in facility and an increase in energy consumption. On the other hand, the adsorbent according to the present embodiment exhibits superior $CO_2$ adsorptivity as compared with an adsorbent such as zeolite even in a case in which the gas contains water. Hence, in the method for removing carbon dioxide according to the present embodiment, the dehumidifying step is not required and carbon dioxide can be efficiently removed even in a case in which the gas contains water.

The dew point of the gas may be 0°C or more. From the viewpoint of increasing the hydroxyl groups on the surface of cerium oxide and enhancing the reactivity with $CO_2$, the dew point of the gas may be -40°C or more and 50°C or less, 0°C or more and 40°C or less, or 10°C or more and 30°C or less. The relative humidity of the gas may be 0% or more, 30% or more, 50% or more, or 80% or more. The relative humidity of the gas is preferably 100% or less (that is, dew does not condense on the adsorbent), more preferably 0.1% or more and 90% or less, and still more preferably 10% or more and 80% or less from the viewpoint of decreasing the energy consumption due to dehumidification. The above relative humidity is a relative humidity at 30°C, for example.

The adsorption amount of carbon dioxide can be adjusted by adjusting the temperature $T_1$ of the adsorbent when bringing the gas into contact with the adsorbent in the adsorption step. The amount of $CO_2$ adsorbed on the adsorbent tends to decrease as the temperature $T_1$ is higher. The temperature $T_1$ may be -20°C to 100°C or 10°C to 40°C.

The temperature $T_1$ of the adsorbent may be adjusted by heating or cooling the adsorbent, and heating and cooling may be used in combination. In addition, the temperature $T_1$ of the adsorbent may be indirectly adjusted by heating or cooling the gas. Examples of a method for heating the adsorbent may include: a method in which a heat medium (for example, a heated gas or liquid) is brought into direct contact with the adsorbent; a method in which a heat medium (for example, a heated gas or liquid) is circulated through a heat transfer pipe or the like and the adsorbent is heated by heat conduction from the heat transfer surface; and a method in which the adsorbent is heated by using an electric furnace which has been electrically heated or the like. Examples of a method for cooling the adsorbent may include: a method in which a refrigerant (for example, a cooled gas or liquid) is brought into direct contact with the adsorbent; and a method in which a refrigerant (for example, a cooled gas or liquid) is circulated through a heat transfer pipe or the like and the adsorbent is cooled by heat conduction from the heat transfer surface.

In the adsorption step, the adsorption amount of carbon dioxide can be adjusted by adjusting the total pressure (for example, the total pressure in the vessel containing the adsorbent) of the atmosphere in which the adsorbent is present. The amount of $CO_2$ adsorbed on the adsorbent tends to increase as the total pressure is higher. The total pressure is preferably 0.1 atm or more and more preferably 1 atm or more from the viewpoint of further improving the removal efficiency of carbon dioxide. The total pressure may be 10 atm or less, 2 atm or less, or 1.3 atm or less from the viewpoint of energy saving. The total pressure may be 5 atm or more.

The total pressure of the atmosphere in which the adsorbent is present may be adjusted by pressurization or depressurization, and pressurization and depressurization may be used in combination. Examples of a method for adjusting the total pressure may include: a method in which the pressure is mechanically adjusted by using a pump, a compressor or the like; and a method in which of a gas having a pressure different from the pressure of the atmosphere surrounding the adsorbent is introduced.

In the method for removing carbon dioxide according to the present embodiment, the adsorbent may be used by being supported on a honeycomb-shaped substrate or by being filled in a vessel. The method for using the adsorbent may be determined in consideration of the required reaction rate, pressure loss, amount adsorbed on the adsorbent, purity ($CO_2$ purity) of the gas (adsorbed gas) to adsorb on the adsorbent, and the like.

In the case of using the adsorbent by being filled in a vessel, it is more preferable as the void fraction is smaller in the case of increasing the purity of carbon dioxide in the adsorbed gas. In this case, the amount of gas remaining in the voids other than carbon dioxide decreases and thus the purity of carbon dioxide in the adsorbed gas can be increased. On the other hand, it is more preferable as the void fraction is greater in the case of diminishing the pressure loss.

The method for removing carbon dioxide according to the present embodiment may further include a desorption step of desorbing (detaching) carbon dioxide from the adsorbent after the adsorption step.

Examples of a method for desorbing carbon dioxide from the adsorbent may include: a method utilizing the temperature dependency of the adsorption amount (temperature swing method. A method utilizing a difference in the amount adsorbed on the adsorbent associated with a change in temperature); a method utilizing the pressure dependency of the adsorption amount (pressure swing method. A method utilizing a difference in the amount adsorbed on the adsorbent associated with a change in pressure), and these methods may be used in combination (temperature and pressure swing method).

In the method utilizing the temperature dependency of the adsorption amount, for example, the temperature of the adsorbent in the desorption step is set to be higher than that in the adsorption step. Examples of a method for heating the adsorbent may include: the same methods as the methods for heating the adsorbent in the adsorption step described above; and a method utilizing surrounding waste heat. It is preferable to utilize surrounding waste heat from the viewpoint of diminishing energy required for heating.

The temperature difference ($T_2 - T_1$) between the temperature $T_1$ of the adsorbent in the adsorption step and the temperature $T_2$ of the adsorbent in the desorption step may be 200°C or less, 100°C or less, or 50°C or less from the viewpoint of energy saving. The temperature difference ($T_2 - T_1$) may be 10°C or more, 20°C or more, or 30°C or more from the viewpoint that the carbon dioxide which has adsorbed on the adsorbent is likely to desorb. The temperature $T_2$ of the adsorbent in the desorption step may be, for example, 40°C to 300°C, 50°C to 200°C, or 80°C to 120°C.

In the method utilizing the pressure dependency of the adsorption amount, it is preferable to change total pressure so that the total pressure in the desorption step is lower than the total pressure in the adsorption step since the $CO_2$ adsorption amount is greater as the total pressure of the atmosphere in which the adsorbent is present (for example, the total pressure in the vessel containing the adsorbent) is higher. The total pressure may be adjusted by pressurization or depressurization, and pressurization and depressurization may be used in combination. Examples of a method for adjusting the total pressure may include the same methods as those in the adsorption step described above. The total pressure in the desorption step may be the pressure of the surrounding air (for example, 1 atm) or less than 1 atm from the viewpoint of increasing the $CO_2$ desorption amount.

The carbon dioxide desorbed and recovered through the desorption step may be discharged to the outdoor air as it is, but it may be reused in the field using carbon dioxide. For example, in greenhouse cultivation houses and the like, there is a case in which the $CO_2$ concentration is increased to a 1000 ppm level since the growth of plants is promoted by increasing the $CO_2$ concentration, and thus the recovered carbon dioxide may be reused for increasing the $CO_2$ concentration.

It is preferable that the gas does not contain SOx, NOx, dust and the like since there is a possibility that the $CO_2$ adsorptivity of the adsorbent in the adsorption step decreases in a case in which SOx, NOx, dust and the like are adsorbed on the adsorbent. In a case in which the gas contains SOx, NOx, dust and the like (for example, a case in which the gas is exhaust gas discharged from a coal fired power plant or the like), it is preferable that the method for removing carbon dioxide according to the present embodiment further includes an impurity removing step of removing impurities such as SOx, NOx, and dust from the gas before the adsorption step from the viewpoint that the $CO_2$ adsorptivity of the adsorbent is likely to be maintained. The impurity removing step can be performed by using a removal apparatus such as a denitrification apparatus, a desulfurization apparatus, or a dust removing apparatus, and the gas can be brought into contact with the adsorbent on the downstream side of these apparatuses. In addition, in a case in which impurities such as SOx, NOx, dust and the like are adsorbed on the adsorbent, impurities adsorbed on the adsorbent can be removed by heating the adsorbent in addition to exchange of the adsorbent.

The adsorbent after being subjected to the desorption step can be used again in the adsorption step. In the method for removing carbon dioxide according to the present embodiment, the adsorption step and the desorption step may be repeatedly performed after the desorption step. The adsorbent may be cooled by the method described above and used in the adsorption step in a case in which the adsorbent is heated in the desorption step. The adsorbent may be cooled by bringing a gas containing carbon dioxide (for example, a gas containing carbon dioxide) into contact with the adsorbent.

The method for removing carbon dioxide according to the present embodiment can be suitably implemented in a sealed space which requires management of $CO_2$ concentration. Examples of the space which requires management of $CO_2$ concentration may include a building; a vehicle; an automobile; a space station; a submarine; a manufacturing plant for a food or a chemical product. The method for removing carbon dioxide according to the present embodiment can be suitably implemented particularly in a space (for example, a space with a high density of people such as a building and a vehicle) in which the $CO_2$ concentration is limited to 5000 ppm or less. In addition, the method for removing carbon dioxide according to the present embodiment can be suitably implemented in a manufacturing plant for a food or a chemical product and the like since there is a possibility that carbon dioxide adversely affects at the time of manufacture of a food or a chemical product.

<Device for removing carbon dioxide, apparatus for removing carbon dioxide and system for removing carbon dioxide>

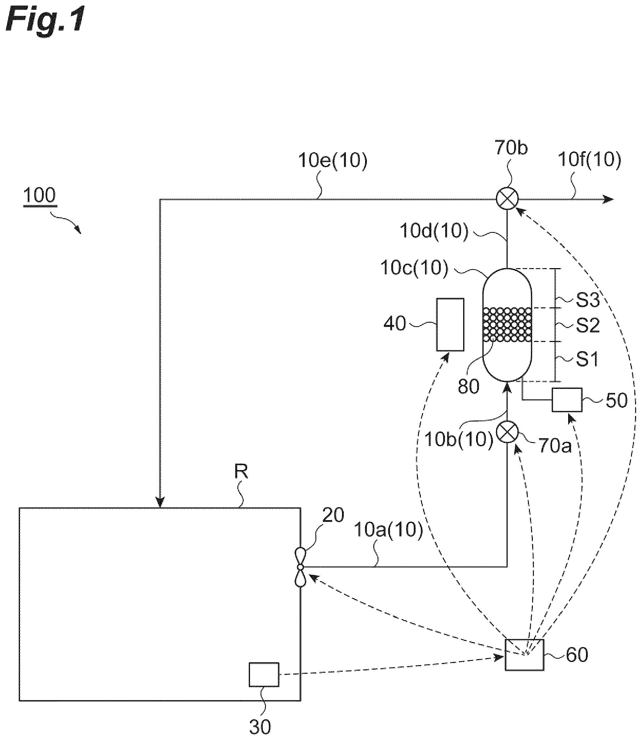

The device for removing carbon dioxide according to the present embodiment is equipped with the adsorbent according to the present embodiment. The apparatus for removing carbon dioxide according to the present embodiment is equipped with the device (reaction vessel) for removing carbon dioxide according to the present embodiment. The apparatus for removing carbon dioxide according to the present embodiment is, for example, an air conditioner used in a space containing a gas containing carbon dioxide. The air conditioner according to the present embodiment is equipped with a flow path connected to the space, and a removal section (a device for removing carbon dioxide, a carbon dioxide removing section) for removing carbon dioxide contained in the gas is disposed in the flow path. In the air conditioner according to the present embodiment, the adsorbent according to the present embodiment is disposed in the removal section, and carbon dioxide adsorbs on the adsorbent as the adsorbent comes into contact with the gas. According to the present embodiment, there is provided an air conditioning method including an adsorption step of bringing a gas in a space to be air-conditioned into contact with an adsorbent to adsorb carbon dioxide on the adsorbent. Incidentally, the details of the gas containing carbon dioxide are the same as those of the gas in the method for removing carbon dioxide described above. Hereinafter, an air conditioner will be described as an example of an apparatus for removing carbon dioxide with reference to FIG 1.

As illustrated in FIG. 1, an air conditioner 100 according to the present embodiment is equipped with a flow path 10, an exhaust fan (exhaust means) 20, a device for measuring concentration (concentration measuring section) 30, an electric furnace (temperature control means) 40, a compressor (pressure control means) 50, and a control apparatus (control section) 60.

The flow path 10 is connected to a space R to be air-conditioned containing a gas (indoor gas) containing carbon dioxide. The flow path 10 includes a flow path section 10a, a flow path section 10b, a removal section (a flow path section, a carbon dioxide removing section) 10c, a flow path section 10d, a flow path section (circulation flow path) 10e, and a flow path section (exhaust flow path) 10f, and the removal section 10c is disposed in the flow path 10. The air conditioner 100 is equipped with the removal section 10c as a device for removing carbon dioxide. In the flow path 10, a valve 70a for adjusting the presence or absence of inflow of the gas in the removal section 10c and a valve 70b for adjusting the flow direction of the gas are disposed.

The upstream end of the flow path section 10a is connected to the space R and the downstream end of the flow path section 10a is connected to the upstream end of the flow path section 10b via the valve 70a. The upstream end of the removal section 10c is connected to the downstream end of the flow path section 10b. The downstream end of the removal section 10c is connected to the upstream end of the flow path section 10d. The downstream side of the flow path section 10d in the flow path 10 is branched into the flow path section 10e and the flow path section 10f. The downstream end of the flow path section 10d is connected to the upstream end of the flow path section 10e and the upstream end of the flow path section 10f via the valve 70b. The downstream end of the flow path section 10e is connected to the space R. The downstream end of the flow path section 10f is connected to the outdoor air.

An adsorbent 80 which is the adsorbent according to the present embodiment is disposed in the removal section 10c. The adsorbent 80 is filled in the central portion of the removal section 10c. Two spaces are formed in the removal section 10c via the adsorbent 80, and the removal section 10c includes a space S1 on the upstream side, a central portion S2 filled with the adsorbent 80, and a space S3 on the downstream side. The space S1 is connected to the space R via the flow path sections 10a and 10b and the valve 70a, and the gas containing carbon dioxide is supplied from the space R to the space S1 of the removal section 10c. The gas which has been supplied to the removal section 10c moves from the space S1 to the space S3 through the central portion S2 and then is discharged from the removal section 10c.

At least a part of carbon dioxide in the gas which has been discharged from the space R is removed in the removal section 10c. The gas from which carbon dioxide has been removed may be returned to the space R by adjusting the valve 70b or discharged to the outdoor air present outside the air conditioner 100. For example, the gas which has been discharged from the space R can flow into the space R from the upstream to the downstream through the flow path section 10a, the flow path section 10b, the removal section 10c, the flow path section 10d, and the flow path section 10e. In addition, the gas which has been discharged from the space R may be discharged to the outdoor air from the upstream to the downstream through the flow path section 10a, the flow path section 10b, the removal section 10c, the flow path section 10d, and the flow path section 10f.

The exhaust fan 20 is disposed at the discharge position of the gas in the space R. The exhaust fan 20 discharges the gas from the space R and supplies the gas to the removal section 10c.

The device for measuring concentration 30 measures the concentration of carbon dioxide in the space R. The device for measuring concentration 30 is disposed in the space R.

The electric furnace 40 is disposed outside the removal section 10c of the air conditioner 100 and can raise the temperature of the adsorbent 80. The compressor 50 is connected to the removal section 10c of the air conditioner 100 and can adjust the pressure inside the removal section 10c.

The control apparatus 60 can control the operation of the air conditioner 100, and for example, it can control the presence or absence of inflow of the gas in the removal section 10c based on the concentration of carbon dioxide measured by the device for measuring concentration 30. More specifically, the concentration information is transmitted from the device for measuring concentration 30 to the control apparatus 60 in a case in which the device for measuring concentration 30 detects that the concentration of carbon dioxide in the space R has increased by exhalation or the like and reached a predetermined concentration. The control apparatus 60, which has received the concentration information, opens the valve 70a and also adjusts so that the gas discharged from the removal section 10c flows into the space R via the flow path section 10d and the flow path section 10e. Thereafter, the control apparatus 60 operates the exhaust fan 20 to supply the gas from the space R to the removal section 10c. Furthermore, the control apparatus 60 operates the electric furnace 40 and/or the compressor 50 if necessary to adjust the temperature of the adsorbent 80, the pressure in the removal section 10c, and the like.

The gas comes into contact with the adsorbent 80 and carbon dioxide in the gas adsorbs on the adsorbent 80 as the gas supplied to the removal section 10c moves from the space S1 to the space S3 via the central portion S2. By this, carbon dioxide is removed from the gas. In this case, the gas from which carbon dioxide has been removed is supplied to the space R via the flow path section 10d and the flow path section 10e.

Carbon dioxide adsorbed on the adsorbent 80 may be recovered in a state of being adsorbed on the adsorbent 80 without being desorbed from the adsorbent 80 or may be desorbed from the adsorbent 80 and recovered. In the desorption step, carbon dioxide can be desorbed from the adsorbent 80 by the temperature swing method, pressure swing method and the like described above as the temperature of the adsorbent 80, the pressure inside the removal section 10c, and the like are adjusted by operating the electric furnace 40 and/or the compressor 50. In this case, for example, the valve 70b is adjusted so that the gas (gas containing the desorbed carbon dioxide) discharged from the removal section 10c is discharged to the outdoor air via the flow path section 10f, and discharged carbon dioxide can be recovered if necessary.

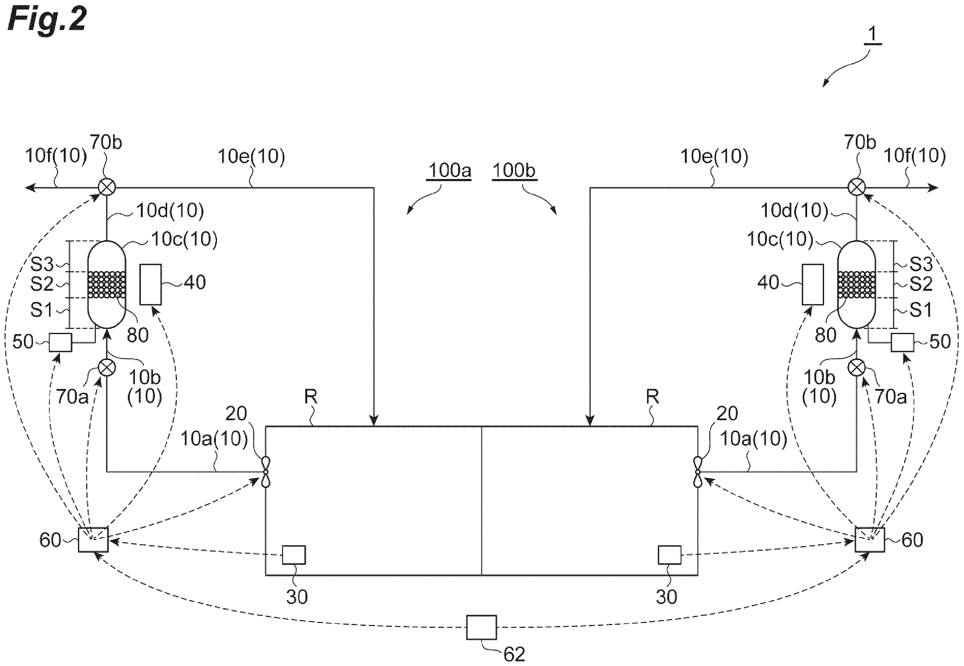

The system for removing carbon dioxide according to the present embodiment is equipped with a plurality of apparatuses for removing carbon dioxide according to the present embodiment. The system for removing carbon dioxide according to the present embodiment is, for example, an air conditioning system equipped with a plurality of air conditioners according to the present embodiment. The system for removing carbon dioxide according to the present embodiment may be equipped with a control section for controlling the operation of a plurality of apparatuses for removing carbon dioxide (for example, air conditioning operation of the air conditioner). For example, the system for removing carbon dioxide according to the present embodiment comprehensively controls the operation of a plurality of apparatuses for removing carbon dioxide (for example, the air conditioning operation of the air conditioner). Hereinafter, an air conditioning system will be described as an example of the system for removing carbon dioxide with reference to FIG. 2.

As illustrated in FIG. 2, an air conditioning system 1 according to the present embodiment is equipped with a first air conditioner 100a, a second air conditioner 100b, and a control apparatus (control section) 62. The control apparatus 62 controls the air conditioning operation of the first air conditioner 100a and the second air conditioner 100b by controlling the control apparatus 60 described above in the first air conditioner 100a and the second air conditioner 100b. For example, the control apparatus 62 may be adjusted so that the air conditioning operation of the first air conditioner 100a and the second air conditioner 100b is performed under the same conditions or the air conditioning operation of the first air conditioner 100a and the second air conditioner 100b is performed under different conditions. The control apparatus 62 can transmit the information on the presence or absence of inflow of the gas in the removal section 10c to the control apparatus 60.

The device for removing carbon dioxide, the apparatus for removing carbon dioxide (air conditioner or the like), and the system for removing carbon dioxide (air conditioning system or the like) are not limited to the above embodiment and may be appropriately changed without departing from the gist thereof. For example, the device for removing carbon dioxide, the apparatus for removing carbon dioxide, and the system for removing carbon dioxide are not limited to being used for air conditioning but can be used in all applications for removing carbon dioxide from a gas containing carbon dioxide.

In the air conditioner, the adsorbent may be disposed in the removal section, and the adsorbent may be disposed in a part of the inner wall surface without being filled in the central portion of the removal section. The contents of control by the control section of the air conditioner are not limited to control of the presence or absence of inflow of the gas in the removal section, and the control section may adjust the inflow amount of the gas in the removal section.

In the air conditioner, a gas may be supplied to the carbon dioxide removing section by using a blower instead of the exhaust fan, and the exhaust means may not be used in a case in which the gas is supplied to the carbon dioxide removing section by natural convection. In addition, the temperature control means and the pressure control means are not limited to the electric furnace and the compressor, and various means described in the adsorption step and the desorption step can be used. The temperature control means is not limited to the heating means, and it may be a cooling means.

In the air conditioner, each of the space to be air-conditioned, the carbon dioxide removing section, the exhaust means, the temperature control means, the pressure control means, the concentration measuring section, the control apparatus, and the like is not limited to one, and a plurality of these may be disposed. The air conditioner may be equipped with a humidity adjuster for adjusting the dew point and relative humidity of the gas; a humidity measuring device for measuring the humidity of the space to be air-conditioned; a removal apparatus such as a denitrification apparatus, a desulfurization apparatus, or a dust removing apparatus.

**Examples**

Hereinafter, the contents of the present invention will be described in more detail with reference to Examples and Comparative Examples, but the present invention is not limited to the following Examples.

<Preparation of adsorbent>

(Example 1)

In the air, 5 g of cerium hydrogencarbonate ($Ce(HCO_3)_3$) was fired according to the following procedure. First, the temperature of cerium carbonate was raised to 120°C at 5°C/min by using an electric furnace and then maintained at 120°C for 1 hour. Thereafter, the temperature was raised to 250°C of the firing temperature at 5°C/min and then maintained at this temperature (250°C) for 1 hour. By this, an adsorbent of Example 1 was obtained. The adsorbent was a yellowish-white powder.

(Comparative Example 1)

Ceric oxide manufactured by Daiichi Kigenso Kagaku Kogyo Co., Ltd. was used as an adsorbent of Comparative Example 1.

<Measurement of physical properties of adsorbent>

(BET specific surface area)

The BET specific surface area was measured using the adsorbents of Example 1 and Comparative Example 1. First, as a pretreatment, the adsorbent was heated at 200°C while performing vacuum drawing. Subsequently, the adsorption isotherm of nitrogen at -196°C was measured. Subsequently, the BET specific surface area s1 was measured by the Brunauer-Emmett-Teller (BET) method. The measurement results are presented in Table 1.

(Specific surface area of micropores)

The specific surface area of the micropores was measured using the adsorbents of Example 1 and Comparative Example 1. First, as a pretreatment, the adsorbent was heated at 200°C while performing vacuum drawing. Subsequently, the adsorption isotherm of nitrogen at -196°C was measured. Subsequently, the specific surface area of the pores in the region having a pore diameter of 17 Å or more was measured by the Barrett-Joyner-Halenda (BJH) method. Thereafter, the specific surface area s2 of the micropores (pores having a pore diameter of less than 17 Å) and the proportion of the micropores were determined using the following equations. The measurement results are presented in Table 1.

$$\text{Specific surface area of micropores s2} = (\text{BET specific surface area s1}) - (\text{specific surface area determined by BJH method})$$

$$\text{Proportion of micropores} = \text{specific surface area of micropores s2/BET specific surface area s1}$$

(Pore distribution)

The differential pore volume was measured as the pore distribution in the region having a pore diameter of 17 Å or more using the adsorbents of Example 1 and Comparative Example 1 according to the following procedure. First, as a pretreatment, the adsorbent was heated at 200°C while performing vacuum drawing. Subsequently, the adsorption isotherm of nitrogen at -196°C was measured, and then the differential pore volume was measured by the BJH method.

The differential pore volume was measured as the pore distribution in the region having a pore diameter of less than 17 Å using the adsorbents of Example 1 and Comparative Example 1 according to the following procedure. First, as a pretreatment, the adsorbent was heated at 200°C while performing vacuum drawing. Subsequently, the adsorption isotherm of argon at the temperature of liquid argon (-185.7°C) was measured, and then the differential pore volume was measured by the Horvath-Kawazoe (HK) method.

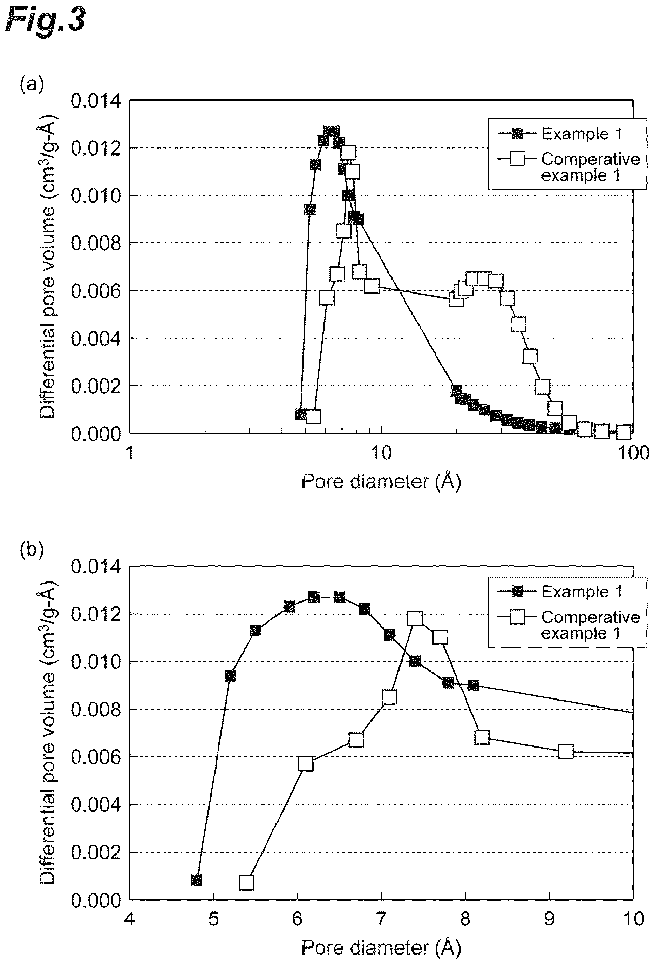

The pore distribution of the adsorbents of Example 1 and Comparative Example 1 measured by the method described above is illustrated in FIG. 3. FIG. 3(a) is a diagram illustrating the pore distribution in a region of 100 Å or less, and FIG. 3(b) is an enlarged diagram illustrating the range having a pore diameter of 4 Å to 10 Å in FIG. 3(a).

< Measurement of adsorption amount of carbon dioxide>

The adsorption amount of carbon dioxide was measured using the adsorbents of Example 1 and Comparative Example 1.

First, the adsorbent was pelletized at 200 kgf by using a pressing machine and a mold having a diameter of 40 mm. Subsequently, the pellet was pulverized and then sized into a granular shape (particle size: 0.5 mm to 1.0 mm) by using a sieve. Thereafter, the adsorbent was weighed by 1.0 mL by using a measuring cylinder and fixed in a reaction tube made of quartz glass.

Subsequently, as a pretreatment, the temperature of the adsorbent was raised to 200°C by using an electric furnace while circulating helium (He) through the reaction tube at 150 mL/min and then maintained at 200°C for 1 hour.

By this, the impurities and the gases adsorbed on the adsorbent were removed.

Subsequently, the adsorbent was cooled to a temperature of 50°C, and then the $CO_2$ adsorption amount was measured by a $CO_2$ pulse adsorption test while maintaining the temperature of the adsorbent at 50°C by using an electric furnace. Specifically, the $CO_2$ pulse adsorption test was performed by the following method.

[$CO_2$ pulse adsorption test]

As a sample gas, 10 mL of a mixed gas (relative humidity: 0%) containing $CO_2$ at 12% by volume and He at 88% by volume was used. The sample gas was introduced in a pulse form for 2 minutes every 4 minutes. At this time, the total pressure inside the reaction tube was adjusted to 1 atm. Subsequently, the $CO_2$ concentration at the outlet of the reaction tube was measured by gas chromatography (carrier gas: He). Introduction of the sample gas was continuously performed until the $CO_2$ concentration measured at the outlet of the reaction tube was saturated. The $CO_2$ adsorption amount (unit: g/L) was determined from the amount (unit: g) of carbon dioxide adsorbed until the $CO_2$ concentration was saturated.

The measurement results are presented in Table 1. By the comparison between Example 1 and Comparative Example 1 in Table 1, it can be seen that the $CO_2$ adsorption amount is greater in Example 1 than in Comparative Example 1 although the BET specific surface area is smaller in Example 1 than in Comparative Example 1.

From FIG. 3, in Example 1, as compared with Comparative Example 1, it can be seen that there are a small number of pores having a pore diameter of 17 Å or more (the differential pore volume in the region having a pore diameter of 17 Å or more is small) but there are a great number of pores having a pore diameter of 5 Å or more and less than 17 Å (the differential pore volume is large in the region having a pore diameter of 5 Å or more and less than 17 Å). The adsorbent of Comparative Example 1 does not have a pore diameter having a differential pore volume of 0.0085 $cm^3$/g-Å or more in a region where a pore diameter is 7 Å or less but the adsorbent of Example 1 has a pore diameter having a differential pore volume of 0.0085 $cm^3$/g-Å or more in a region where a pore diameter is 7 Å or less particularly in the pore distribution (pore distribution in a region where a pore diameter is less than 17 Å) measured by the Horvath-Kawazoe method. In other words, by the comparison between Example 1 and Comparative Example 1, it is considered that an effect of exhibiting excellent $CO_2$ adsorptivity is obtained in a case in which the adsorbent containing cerium oxide has a pore diameter having a differential pore volume of 0.0085 $cm^3$/g-Å or more in a region where a pore diameter is 7 Å or less.

[Table 1]

|  | Cerium salt | Firing temperature (°C) | s1 ($m^2$/g) | s2 ($m^2$/g) | s2/s1 | $CO_2$ adsorption amount (g/L) |
|---|---|---|---|---|---|---|
| Example 1 | Cerium hydrogen carbonate | 250 | 130.48 | 92.45 | 0.71 | 19.6 |
| Comparative Example 1 | - | - | 168 | 75.3 | 0.45 | 14.1 |

**Reference Signs List**

1: air conditioning system, 10: flow path, 10a, 10b, 10d, 10e, 10f: flow path section, 10c: removal section (device for removing carbon dioxide), 20: exhaust fan, 30: device for measuring concentration (concentration measuring section), 40: electric furnace, 50: compressor, 60, 62: control apparatus (control section), 70a, 70b: valve, 80: adsorbent, 100, 100a, 100b: air conditioner, 100a, 100b: air conditioner, R: space to be air-conditioned, S1, S3: space, S2: central portion.

**Claims**

1.  An adsorbent used for removing carbon dioxide from a gas comprising carbon dioxide, the adsorbent comprising:

    cerium oxide, wherein
    the adsorbent has a pore diameter having a differential pore volume of 0.0085 $cm^3$/g-Å or more in a region where a pore diameter is 7 Å or less in pore distribution measured by Horvath-Kawazoe method.

2.  The adsorbent according to claim 1, wherein the adsorbent has a pore diameter having a differential pore volume of 0.0085 $cm^3$/g-Å or more in a region where a pore diameter is 6 Å or more and 7 Å or less in the pore distribution.

3. The adsorbent according to claim 1 or 2, wherein a content of the cerium oxide is 90% by mass or more based on a total mass of the adsorbent.

4. A method for removing carbon dioxide, the method comprising a step of bringing the adsorbent according to any one of claims 1 to 3 into contact with a gas comprising carbon dioxide to adsorb carbon dioxide on the adsorbent.

5. The method for removing carbon dioxide according to claim 4, wherein a concentration of carbon dioxide in the gas is 5000 ppm or less.

6. The method for removing carbon dioxide according to claim 4, wherein a concentration of carbon dioxide in the gas is 1000 ppm or less.

7. A device for removing carbon dioxide comprising the adsorbent according to any one of claims 1 to 3.

8. An air conditioner used in a space comprising a gas comprising carbon dioxide, the air conditioner comprising a flow path connected to the space, wherein
a removal section for removing carbon dioxide contained in the gas is disposed in the flow path,
the adsorbent according to any one of claims 1 to 3 is disposed in the removal section, and
the carbon dioxide adsorbs on the adsorbent as the adsorbent comes into contact with the gas.

9. The air conditioner according to claim 8, wherein a concentration of carbon dioxide in the gas is 5000 ppm or less.

10. The air conditioner according to claim 8, wherein a concentration of carbon dioxide in the gas is 1000 ppm or less.

# *Fig.1*

Fig.2

EP 3 459 628 A1

## Fig.3

(a)

(b)

## INTERNATIONAL SEARCH REPORT

International application No.

PCT/JP2017/018233

A.  CLASSIFICATION OF SUBJECT MATTER

*B01J20/06*(2006.01)i, *B01D53/04*(2006.01)i, *B01D53/62*(2006.01)i, *B01D53/81*
(2006.01)i, *B01J20/28*(2006.01)i, *F24F3/12*(2006.01)i

According to International Patent Classification (IPC) or to both national classification and IPC

B.  FIELDS SEARCHED

Minimum documentation searched (classification system followed by classification symbols)
B01J20/06, B01D53/04, B01D53/62, B01D53/81, B01J20/28, F24F3/12

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2013-59703 A  (Hitachi, Ltd.),<br>04 April 2013 (04.04.2013),<br>claims; example 5; fig. 1, 2, 5<br>& US 2013/0064746 A1<br>claims; example 5; fig. 1, 2, 5<br>& EP 2567751 A1        & CA 2785323 A1 | 1-4,7<br>5-6,8-10 |
| Y | WO 2015/125355 A1  (Sharp Corp.),<br>27 August 2015 (27.08.2015),<br>claims; paragraphs [0021], [0033]; fig. 1 to 9<br>& US 2016/0354722 A1<br>claims; paragraphs [0030], [0042]; fig. 1 to 9<br>& JP 6143939 B2        & CN 105939773 A | 5-6,8-10 |

| ☒ | Further documents are listed in the continuation of Box C. | ☐ | See patent family annex. |

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 August 2017 (01.08.17) | Date of mailing of the international search report<br>15 August 2017 (15.08.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/018233

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-529747 A (Honeywell International Inc.), 30 September 2004 (30.09.2004), & US 2002/0025290 A1 & WO 2002/059039 A1 & EP 1355851 A1 | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000140549 A